# EUROPÄISCHE PATENTSCHRIFT

(11) **EP 3 024 684 B1**
(45) Veröffentlichungstag und Bekanntmachung des Hinweises auf die Patenterteilung: **08.08.2018**
(21) Anmeldenummer: 14729277.5
(22) Anmeldetag: 04.06.2014
(51) Int. Cl.: B60K 26/02, G05G 1/44, G05G 5/03, G05G 1/015, G05G 1/38, G05G 25/00, G05G 25/02

(54) **HAPTISCHES KRAFTFAHRZEUG-FAHRPEDAL MIT ELASTISCH ANGEKOPPELTEM AKTUATOR SOWIE VERFAHREN UND REGELUNGSEINHEIT ZUM REGELN DESSELBEN**
HAPTIC MOTOR-VEHICLE ACCELERATOR PEDAL HAVING AN ELASTICALLY COUPLED ACTUATOR AND METHOD AND CONTROL UNIT FOR CONTROLLING SAID ACCELERATOR PEDAL
PÉDALE D'ACCÉLÉRATEUR HAPTIQUE D'UN VÉHICULE AUTOMOBILE, COMPRENANT UN ACTIONNEUR COUPLÉ DE MANIÈRE ÉLASTIQUE, AINSI QUE PROCÉDÉ ET UNITÉ DE RÉGLAGE SERVANT À RÉGLER LADITE PÉDALE D'ACCÉLÉRATEUR

(30) Priorität: 23.07.2013 DE 102013214371
(43) Veröffentlichungstag der Anmeldung: 01.06.2016
(73) Patentinhaber: Robert Bosch GmbH, 70442 Stuttgart (DE)
(72) Erfinder: KONIGORSKI, Ulrich, 76646 Bruchsal (DE); STANCHEV, Radoy, 64295 Darmstadt (DE); SIEBER, Udo, 74321 Bietigheim (DE)
(86) Internationale Anmeldenummer: PCT/EP2014/061584
(87) Internationale Veröffentlichungsnummer: WO 2015/010816

(56) Entgegenhaltungen:
- DE-A1- 3 232 160
- DE-A1- 10 250 456
- DE-A1- 10 315 253
- DE-A1-102004 002 114
- DE-A1-102011 088 281

## Beschreibung

### Gebiet der Erfindung

Die vorliegende Erfindung betrifft ein Pedalsystem für ein Kraftfahrzeug und ein Verfahren sowie eine Regelungseinheit zum Regeln eines solchen Pedalsystems in einem Kraftfahrzeug. Die Erfindung betrifft ferner ein Computerprogrammprodukt, das beim Ausführen auf einer programmierbaren Regelungseinheit das erfindungsgemäße Verfahren ausführen soll, sowie ein computerlesbares Medium, auf dem ein solches Computerprogrammprodukt gespeichert ist.

### Stand der Technik

In modernen Kraftfahrzeugen wird ein Fahrer häufig durch eine Vielzahl von zur Verfügung gestellten Informationen beim Führen des Fahrzeugs unterstützt. Insbesondere werden auch Möglichkeiten einer haptischen Rückmeldung an den Fahrer über ein Fahrpedal des Fahrzeugs implementiert. Das Fahrpedal ist hierzu mit einem Aktuator ausgestattet, der es ermöglicht, einen Pedalhebel gezielt mit einer Kraft zu beaufschlagen. Derart ausgestaltete Fahrpedale werden häufig als haptische Fahrpedale bezeichnet.

Beispielsweise kann der Aktuator ab einer bestimmten Fahrpedallage einem weiteren Niederdrücken des Fahrpedals gezielt entgegenwirken, um einem Fahrer so beispielsweise zu signalisieren, dass ein stärkeres Niederdrücken des Fahrpedals zu einer überproportionalen Erhöhung des Kraftstoffverbrauchs führen würde. Alternativ kann mit Hilfe des Aktuators eine zeitlich variierende Kraft auf das Fahrpedal ausgeübt werden, um dieses in Schwingungen zu versetzen, beispielsweise in Form von Vibrationen oder Pulsationen.

DE 25 55 429 beschreibt ein System zur Erzeugung von taktilen bzw. haptisch wahrnehmbaren Signalen an einem Pedal in einem Fahrzeug.

DE 10 2013 205281 beschreibt den grundsätzlichen mechanischen Aufbau eines Pedalsystems welches ausgeführt ist, eine haptische Rückkopplung an einen Fahrzeuglenker zu geben.

Aus der DE 103 15 253 A1, die die im Oberbegriff von Anspruch 1 genannten Merkmale aufweist, ist eine Fahrzeug-Gaspedalvorrichtung bekannt.

### Offenbarung der Erfindung

Ausführungsformen der vorliegenden Erfindung ermöglichen ein Pedalsystem für ein Kraftfahrzeug, mit einer verbesserten Regelung der über ein haptisches Fahrpedal in Richtung eines Fahrzeuglenkers ausgeübten Kraft. Ferner ermöglichen Ausführungsformen der vorliegenden Erfindung eine vorteilhafte Regelung eines solchen haptischen Fahrpedals in einem Pedalsystem sowie eine für die Ausführung eines solchen Verfahrens angepasste Regelungseinheit.

Gemäß einem ersten Aspekt der vorliegenden Erfindung wird ein Pedalsystem für ein Kraftfahrzeug vorgeschlagen, das einen Pedalhebel, der von einem Fahrer durch Ausüben einer Kraft verlagert werden kann, einen Aktuator, der dazu ausgelegt ist, eine dieser Kraft entgegen wirkende Rückstellkraft auf den Pedalhebel auszuüben, sowie eine Regelungseinheit zum Regeln des Aktuators aufweist. Das Pedalsystem weist ferner ein elastisches Kopplungselement auf, welches wirkmäßig zwischen dem Pedalhebel und dem Aktuator derart angeordnet ist, dass die von dem Aktuator erzeugte Gegenkraft über das Kopplungselement zumindest teilweise auf den Pedalhebel übertragen wird. Das Pedalsystem zeichnet sich dadurch aus, dass ein Federweg des elastischen Kopplungselementes in Richtung der auf den Pedalhebel ausgeübten Kraft als Regelungsgröße für die Regelungseinheit verwendet wird. Das Kopplungselement kann in einer Ausführungsform eine verhältnismäßig geringe Steifigkeit aufweisen, d.h. eine Federkonstante aufweisen, die kleiner als 15 Nm /° Pedalwinkel ist.

Dadurch, dass ein Federweg des elastischen Kopplungselementes als Regelungsgröße zum Regeln der Kraft, die der Aktuator auf den Pedalhebel ausübt, verwendet wird, kann die Regelung des Aktuators bzw. der durch diesen ausgeübten Kraft verbessert werden. Ebenso kann die Regelung dadurch schneller erfolgen, da als Regelungsgröße unmittelbar ein Federweg, welcher beispielsweise eine Länge bzw. Ausdehnung oder ein Verdrehwinkel des elastischen Kopplungselementes sein kann, herangezogen wird. Damit muss insbesondere eine Regelung nicht über möglicherweise fehlerbehaftete Regelungsgrößen wie z.B. der Antriebsenergie des Aktuators erfolgen, da die Antriebsenergie auf Grund verschiedenster Faktoren schwanken kann oder einer fehlerbehafteten Messung ausgesetzt sein kann. Wird als Aktuator beispielsweise ein Gleichstrommotor eingesetzt und als Regelungsgröße der Antriebsstrom dieses Gleichstrommotors herangezogen, kann die Regelung ungenau sein, da der Antriebsstrom beispielsweise von der Umgebungstemperatur und ggf. einer Reibung in dem Antrieb beeinflusst werden kann. Im Gegensatz zu einer solchen mittelbaren Regelung erfolgt bei dem oben und im Folgenden beschriebenen Pedalsystem eine unmittelbare Regelung mit dem Federweg des elastischen Kopplungselementes als Regelungsgröße. Der Aktuator wird also unabhängig von Reibung, Umgebungstemperatur, oder anderen Faktoren, die den Aktuator beeinflussen, geregelt, um so die gewünschte Kraft auf den Pedalhebel in wiederholbarer Weise mit einer möglichst hohen Genauigkeit auszuüben.

Ausführungsformen des erfindungsgemäßen Fahrpedals können unter anderem als auf den folgenden Überlegungen und Erkenntnissen beruhend angesehen werden:
Bisherige haptische Fahrpedalsysteme besitzen meist einen direkt gekoppelten Kraft- oder Momentenantrieb zur Generierung einer zusätzlichen Rückstellkraft. Direkt gekoppelter Kraft- oder Momentenantrieb bedeutet hierbei, dass ein Übertragungsmechanismus, zum Beispiel in Form eines Gestänges und / oder eines Stirnradgetriebes, zwischen einem Aktuator als Kraft- oder Momentenquelle und dem Pedalhebel des Fahrpedals gänzlich oder weitgehend starr ausgebildet ist und somit sich im Wesentlichen unelastisch verhält. Dadurch können zum Beispiel unvermeidbare kurzzeitige Momenteneinbrüche eines bürstenbehafteten Gleichstrommotors, welche auch als "torque-ripple" bezeichnet werden, in ihrer relativen Größe weitgehend unverändert an den Pedalhebel weitergegeben werden, was unter Umständen von dem Fahrer als deutlich störend spürbar empfunden werden kann. Das elastische Kopplungselement wie oben und im Folgenden beschrieben kann in seiner Wirkung als mechanisches Tiefpaßfilter beschrieben werden, da die genannten torque-ripple nicht oder nur in reduziertem Ausmaß an den Fahrer weitergegeben werden.

Außerdem kann die von dem Aktuator auf den Pedalhebel zu bewirkende zusätzliche Rückstellkraft in ihrem Wert nicht regelbar verfälscht werden. Zum einen könnten zum Beispiel bei einer entsprechend schnellen Pedalhebelbetätigung unerwünschte Erhöhungen der Rückstellkraft wegen zusätzlicher Trägheitsmomente durch das angekoppelte Mitbewegen des Aktuators auftreten. Zum anderen ist der Kraft- oder Momenten-Übertragungsmechanismus für den Aktuator im Allgemeinen reibungsbehaftet. Das Reibverhalten unterliegt aber regelmäßig unterschiedlichen Einflüssen, beispielsweise temperaturbedingt, bedingt durch eine Chargenstreuung oder bedingt durch Alterung, und lässt sich somit allenfalls näherungsweise vorbestimmen. Außerdem unterliegt eine Kraft- oder Momentenbeziehung zum beaufschlagten Strom durch den Aktuator Einflüssen aus Temperatur-, Werkstoff- und Bauteiltoleranz-Schwankungen, die praktisch als Unbekannte die Rückstellkraft mitbestimmen.

Die genannten Mängel lassen sich gemäß einer der Erfindung zugrunde liegenden Idee dadurch beheben beziehungsweise reduzieren, dass zwischen dem Pedalhebel und dem Aktuator des Fahrpedals ein elastisches Kopplungselement vorgesehen wird, mithilfe dessen eine geeignete Elastizität in den Übertragungsmechanismus eingeführt wird, wobei der Federweg des elastischen Kopplungselementes als Regelungsgröße für den Aktuator herangezogen wird, d.h. dass der Aktuator entsprechend dem Federweg des elastischen Kopplungselementes in eine von zwei Bewegungsrichtungen über eine von der Regelungseinheit vorgegebene Distanz mit einer ebenfalls von der Regelungseinheit vorgegebenen Geschwindigkeit angetrieben bzw. bewegt wird.

Als elastisches Kopplungselement kann dabei ein beliebiges Bauelement wirkmäßig zwischen dem Pedalhebel und dem Aktuator vorgesehen werden, welches eine elastische Kopplung dieser beiden Komponenten mit einer Federkonstante einrichtet, welche wesentlich geringer ist als bei der herkömmlich idealerweise als starr angenommenen Kopplung zwischen Pedalhebel und Aktuator. Insbesondere kann die Federkonstante kleiner als 15 Nm / ° Pedalwinkel, vorzugsweise kleiner als 3 Nm / ° Pedalwinkel und stärker bevorzugt in einem Bereich von 0,3 bis 1 Nm / ° Pedalwinkel sein. Das elastische Kopplungselement kann insbesondere als Feder, beispielsweise als Drehfeder, ausgebildet werden, da deren elastische Eigenschaften genau vorgegeben werden können und über einen langen Zeitraum hin konstant bleiben können. Dabei gilt grundsätzlich, dass ein elastisches Kopplungselement mit niedrigerer Steifigkeit, d.h. niedrigerer Federkonstante, die Funktion als mechanisches Tiefpaßfilter besser erfüllen kann als eines mit höherer Steifigkeit, da die genannten torque-ripple besser aufgenommen und von dem Pedalhebel ferngehalten werden können. Ein elastisches Kopplungselement mit niedrigerer Steifigkeit, beispielsweise eine Feder mit niedrigerer Federkonstante, kann aber eine stärkere Dehnung erfordern, um eine vorgegebene Kraft auf den Pedalhebel auszuüben. Diese erforderte stärkere Dehnung kann mit einem Motor und einem Getriebe bewirkt werden. Um dabei weiterhin eine hohe Genauigkeit betreffend die auf den Pedalhebel ausgeübte Kraft zu erzielen, wird gerade der Federweg des elastischen Kopplungselementes als Regelungsgröße für den Aktuator herangezogen. Damit kann eine schnellere und genauere Regelung des Aktuators erfolgen, welche eine Voraussetzung dafür sein kann, ein elastisches Kopplungselement mit niedrigerer Steifigkeit zu verwenden.

Das elastische Kopplungselement kann insbesondere dazu ausgelegt sein, von dem Aktuator erzeugte Schwingungen mit Frequenzen von mehr als 8 Hz, vorzugsweise mehr als 15 Hz und stärker bevorzugt in einem Bereich von 30 bis 4000Hz, signifikant zu dämpfen. Das elastische Kopplungselement kann somit als eine Art mechanischer Tief-Pass-Filter zwischen dem Aktuator und dem Pedalhebel dienen, so dass einerseits zwar niedrigfrequente Bewegungen durch Übertragung von Kräften beziehungsweise Momenten von dem Aktuator auf den Pedalhebel übertragen werden können, um beispielsweise in gewünschter Weise haptisch wahrnehmbare Signale an dem Pedalhebel zu erzeugen, andererseits jedoch beispielsweise unerwünschte hochfrequente Kraft- beziehungsweise Momentenschwankungen nicht von dem Aktuator über das elastische Kopplungselement auf den Pedalhebel übertragen werden können.

Um das mit einem elastischen Kopplungselement versehene haptische Fahrpedal geeignet ansteuern zu können und trotz der elastisch nachgiebigen Kopplung zwischen dem Aktuator und dem Pedalhebel geeignet haptisch wahrnehmbare Signale erzeugen zu können, ist an dem Fahrpedal zumindest ein Pedalhebellagesensor und ein Aktuatorlagesensor vorgesehen. Der Pedalhebellagesensor dient dabei zum Erfassen einer aktuellen Position des Pedalhebels, wohingegen der Aktuatorlagesensor zum Erfassen einer aktuellen Position des Aktuators dient.

Je nach struktureller Ausgestaltung der Komponenten des haptischen Fahrpedals kann dabei unter einer Position des Pedalhebels beziehungsweise des Aktuators beispielsweise eine räumliche Anordnung des Pedalhebels beziehungsweise Aktuators relativ zu einer Referenzposition verstanden werden. Die räumliche Anordnung kann dabei beispielsweise als Distanz zu einem Referenzpunkt oder als Winkelunterschied zu einer Referenzlage angegeben werden.

Wie weiter unten im Detail beschrieben, kann es zum Regeln einer Kraft auf das haptische Fahrpedal ferner notwendig sein, Informationen über die elastischen Eigenschaften des elastischen Kopplungselements bereit zu stellen, beispielsweise in Form von Kennlinien, welche zum Beispiel eine Verformung des Kopplungselements in Abhängigkeit von einer auf das Kopplungselement ausgeübten Kraft beziehungsweise Moment angeben.

Gemäß einem zweiten Aspekt der vorliegenden Erfindung wird ein Verfahren zum Regeln des oben beschriebenen Pedalsystems vorgeschlagen. Dabei wird davon ausgegangen, dass der Pedalhebel des Fahrpedals innerhalb eines Verlagerungsbereichs entlang einer Betätigungsrichtung zwischen einer Ruheposition ϕₚ₀ und einer maximal betätigten Position ϕₚₘₐₓ verlagerbar ist und mittels des Aktuators durch Ausüben einer Gegenkraft entgegen der Betätigungsrichtung zur Erzeugung eines haptisch wahrnehmbaren Signals angeregt werden kann. Das Regelungsverfahren zeichnet sich dadurch aus, dass eine aktuelle Position ϕₚ des Pedalhebels sowie eine aktuelle Position ϕₐ des Aktuators ermittelt werden und der Aktuator darauf basierend derart geregelt wird, dass von dem Aktuator das haptisch wahrnehmbare Signal mit einem vorgegebenen Kraftprofil über das Kopplungselement auf das Fahrpedal ausgeübt wird. Beim Regeln des Aktuators werden dabei neben der ermittelten aktuellen Position ϕₚ des Pedalhebels und der aktuellen Position ϕₐ des Aktuators außerdem die elastischen Eigenschaften des Kopplungselements berücksichtigt.

Die Position des Aktuators kann dabei in vorteilhafter Weise mithilfe einer Zwei-Freiheitsgrade-Regelung geregelt werden.

Gemäß einem dritten Aspekt der vorliegenden Erfindung wird eine Regelungseinheit beschrieben, das dazu ausgelegt ist, ein haptisches Fahrpedal in einem Pedalsystem zu regeln und dabei ein Verfahren, wie es zuvor mit Bezug auf den zweiten Aspekt der Erfindung beschrieben wurde, durchzuführen.

Die Regelungseinheit kann hierfür unter anderem über einen Dateneingang zum Empfangen von Daten, welche eine aktuelle Position des Pedalhebels angeben, einen Dateneingang zum Empfangen von Daten, welche eine aktuelle Position des Aktuators angeben, sowie eine Optimalwertsteuerung und eine PID-Steuerung verfügen.

Die Regelungseinheit kann das vorgeschlagene Regelungsverfahren sowie etwaige Informationsauswertungen von Sensorsignalen in Hardware und/oder in Software implementieren. Es kann vorteilhaft sein, eine programmierbare Regelungseinheit für die Ausführung des oben beschriebenen Verfahrens zu programmieren. Hierzu kann ein Computerprogrammprodukt computerlesbare Anweisungen aufweisen, die die programmierbare Regelungseinheit dazu anweisen, die Schritte des jeweiligen Verfahrens durchzuführen. Das Computerprogrammprodukt kann auf einem computerlesbaren Medium wie beispielsweise einer CD, einer DVD, einem Flashspeicher, einem ROM, einem EPROM oder ähnlichem gespeichert sein. Um die von dem Aktuator einzunehmende Anordnung korrekt ansteuern zu können, kann neben der Verarbeitung weiterer Sensordaten auch in einer Datenbank oder in Form von Kennlinien gespeicherte Information bezüglich beispielsweise den elastischen Eigenschaften der Kopplungsfeder oder ein von dem Aktuator durchgeführtes Reaktionsverhalten auf bestimmte Steuerungssignale oder ein Streckenverhalten des Aktuators herangezogen werden.

Die vorgeschlagene wirkmäßige Zwischenlagerung eines elastischen Kopplungselementes zwischen dem Pedalhebel und dem diesen mit einer Kraft beziehungsweise mit einem Moment beaufschlagenden Aktuator kann unter anderem die folgenden Vorteile mit sich bringen:
- Die eingeführte Elastizität erlaubt eine geringe Impedanz und damit eine Entkopplung einer Störung von der Regelgröße bei dem zum Regeln der Kraft auf das haptische Fahrpedal eingesetzten Regelungsverfahren.
- Eine geringe Federsteifigkeit beziehungsweise Federkonstante des elastischen Kopplungselements kann mit einer höheren Reglerverstärkung kompensiert werden.
- Eine geringe Federsteifigkeit kann sich positiv auf eine Regelgüte auswirken und damit den Einfluss von zum Beispiel Haftreibung oder Getriebespiel besser berücksichtigen.
- Es kann eine Art günstiger "Momentensensor" bereitgestellt werden, wobei zusätzliche Pedalkräfte innerhalb von Toleranzen kontrolliert werden können
- Eine Momentenregelung kann als Positionsregelung umformuliert werden, welche einfacher beherrschbar ist und welche Einflüsse durch Temperatur und Reibung auf die ausgeübte Kraft beziehungsweise das Drehmoment eliminiert.

Es wird angemerkt, dass mögliche Merkmale und Vorteile von Ausführungsformen der Erfindung hierin teilweise mit Bezug auf ein erfindungsgemäßes Pedalsystem, teilweise mit Bezug auf ein erfindungsgemäßes Verfahren und teilweise mit Bezug auf eine erfindungsgemäße Regelungseinheit beschrieben sind. Ein Fachmann wird erkennen, dass die einzelnen Merkmale in geeigneter Weise miteinander kombiniert oder ausgetauscht werden können, beispielsweise von der Regelungseinheit auf das Verfahren und umgekehrt übertragen werden können, um auf diese Weise zu weiteren Ausführungsformen und möglicherweise Synergieeffekten gelangen zu können.

### Kurze Beschreibung der Zeichnungen

Nachfolgend werden Ausführungsformen der Erfindung mit Bezug auf die beigefügten Zeichnungen beschrieben. Weder die Beschreibung noch die Zeichnungen sollen dabei als die Erfindung einschränkend ausgelegt werden.
Figur 1 zeigt schematisch ein Fahrzeug mit einem Pedalsystem gemäß einer Ausführungsform der vorliegenden Erfindung.
Figur 2 zeigt eine perspektivische Ansicht eines haptischen Fahrpedals eines Pedalsystems gemäß einer Ausführungsform der vorliegenden Erfindung.
Figur 3 zeigt eine andere perspektivische Ansicht des in Figur 2 dargestellten haptischen Fahrpedals.
Figur 4 zeigt ein regeltechnisches Modell eines Aktuators und einer Reglerstruktur zum Durchführen eines Regelungsverfahrens für ein Pedalsystem gemäß einer Ausführungsform der vorliegenden Erfindung.
Figur 5 zeigt eine alternative Veranschaulichung einer Regelung für ein Pedalsystem gemäß einer Ausführungsform der vorliegenden Erfindung.
Figur 6 zeigt ein elastisches Kopplungselement für ein Pedalsystem gemäß einer weiteren Ausführungsform der Erfindung.
Figur 7 zeigt ein elastisches Kopplungselement für ein Pedalsystem gemäß einer weiteren Ausführungsform der Erfindung.

Die Figuren sind lediglich schematisch und nicht maßstabsgetreu.

### Ausführungsformen der Erfindung

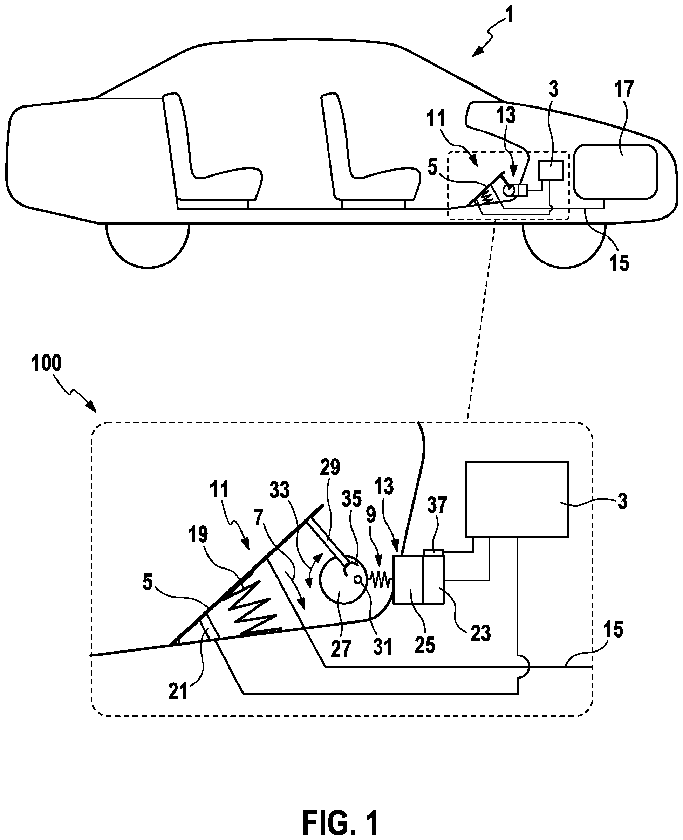

Figur 1 zeigt eine Schnittansicht eines Fahrzeugs 1 mit einem haptischen Fahrpedal 11 eines Pedalsystems 100. Durch Niederdrücken des Pedalhebels 5 kann ein Fahrer einen Motor 17 des Fahrzeugs 1 über einen Seilzug 15 oder eine mit einem Motorsteuergerät verbundene Leitung (nicht dargestellt) zum Beschleunigen des Fahrzeugs veranlassen. Der Fahrer muss hierzu den Pedalhebel 5 in einer Betätigungsrichtung des Pfeils 7 niederdrücken, wodurch sich der Pedalhebel 5, ausgehend von einer Ruheposition entlang eines Verlagerungsbereichs hin zu einer maximal betätigten Position, verlagern lässt. Ein Pedalhebellagesensor 21 kann dabei die aktuelle Position bzw. Lage des Pedalhebels 5 bestimmen. Eine Feder 19 spannt den Pedalhebel 5 entgegen der Betätigungsrichtung 7 hin zu der Ruheposition vor.

Das Fahrpedal 11 ist als haptisches Fahrpedal ausgestaltet. Hierzu verfügt das Fahrpedal 11 über einen Aktuator 13, mit Hilfe dessen der Pedalhebel 5 in eine gewünschte Richtung entgegen der Betätigungsrichtung 7 bewegt bzw. in diese mit Kraft beaufschlagt werden kann. Der Aktuator 13 kann hierbei den Pedalhebel 5 zu Schwingungen anregen, beispielsweise in Form von Vibrationen oder Pulsationen. Alternativ kann der Aktuator 13 eine Kraft auf den Pedalhebel 5 ausüben, die ein weiteres Niederdrücken des Pedalhebels 5 erschweren kann und somit von einem Fahrer als Druckpunkt beim Betätigen des Pedalhebels 5 wahrgenommen werden kann.

Der Aktuator 13 kann mit einem Gleichstrommotor 23 betrieben werden, der über ein Getriebe 25 mit einem Betätigungselement 27 gekoppelt ist. Durch Betätigen des Motors 23 kann das Betätigungselement 27, wie durch den Pfeil 33 angedeutet, im oder gegen den Uhrzeigersinn verdreht bzw. in zwei beispielsweise entgegengesetzte Richtungen bewegt werden. An dem Betätigungselement 27 ist ein Mitnahmeelement 31, beispielsweise in Form eines Nockens, vorgesehen. Bei einem kreisförmigen Betätigungselement 27 kann das Mitnahmeelement 31 in einem außerzentrischen Bereich angeordnet sein. Dieses Mitnahmeelement 31 kann mit einem an dem Pedalhebel 5 vorgesehenen mechanisches Kopplungselement 29, welches in einer Ausführungsform beispielsweise als Kraftübertragungselement in Form eines Stößels ausgeführt sein kann, zusammenwirken. Hierzu weist das mechanische Kopplungselement 29 an seinem zu dem Aktuator 13 gerichteten Ende beispielsweise ein Anknüpfungselement 35, welches in einem Ausführungsbeispiel als gabelförmige Aufnahme ausgeführt sein kann, auf, mit welchem das Mitnahmeelement 31 mechanisch gekoppelt werden kann, sobald das Betätigungselement 27 in eine entsprechende Position bewegt wurde.

Alternativ kann der Aktuator auch als Direktantrieb beispielsweise mit einem Torquer-Motor ausgestaltet sein, wodurch hohe Kräfte auch ohne ein Getriebe erzeugt werden können.

Der Aktuator 13 wird von einer Regelungseinheit 3 angesteuert. Die Regelungseinheit 3 erkennt, wenn einem Fahrer über den Pedalhebel 5 ein haptisch wahrnehmbares Signal übermittelt werden soll, um ihn beispielsweise auf die Möglichkeit einer kraftstoffsparenden Fahrweise oder eine Gefahrensituation hinzuweisen. Die Regelungseinheit steuert daraufhin den Aktuator derart an, dass eine konstante oder zeitlich variierende Kraft entgegen der Betätigungsrichtung 7 auf den Pedalhebel 5 ausgeübt wird.

Wie in der vergrößerten Darstellung aus Figur 1 schematisch dargestellt, ist der Aktuator 13 nicht starr mit dem Pedalhebel 5 gekoppelt. Stattdessen ist zwischen dem Getriebe 25 des Aktuators 13 und dem Betätigungselement 27 ein elastisches Kopplungselement 9 in Form einer Feder vorgesehen, so dass die von dem Aktuator 13 bewirkten Stellkräfte über dieses elastische Kopplungselement 9 an das Betätigungselement 27 und über dieses an den Pedalhebel 5 weiter gegeben werden. Aufgrund der elastisch federnden Eigenschaften des Kopplungselements 9 kann somit weitgehend verhindert werden, dass beispielsweise in dem Motor 23 des Aktuators 13 auftretende kurzzeitige Momenteneinbrüche (torque-ripple) direkt an den Pedalhebel 5 weiter gegeben werden und dort von einem Fahrer als störend wahrgenommen werden können. Stattdessen werden solche hochfrequenten Störungen von dem elastischen Kopplungselement 9 signifikant gedämpft.

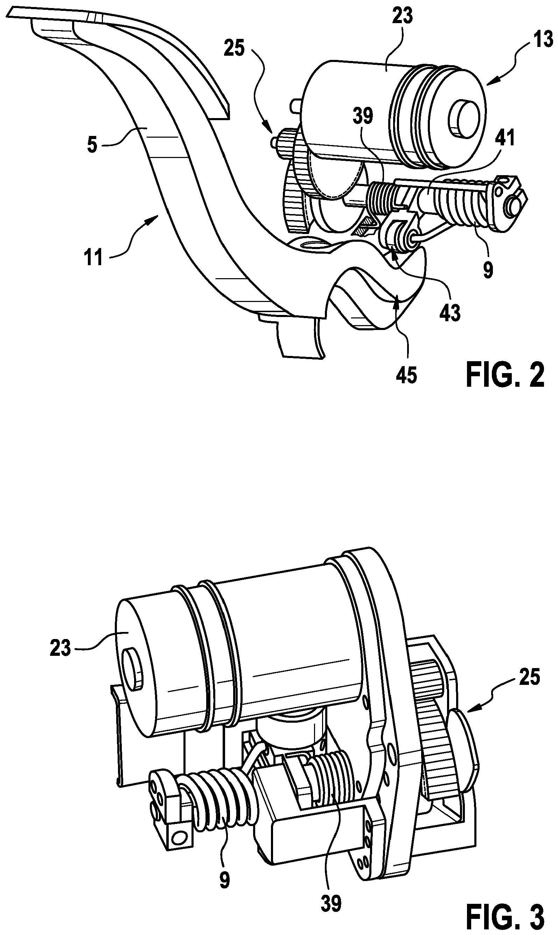

Während in Figur 1 der Kraftübertragungsmechanismus einer Ausführungsform eines haptischen Fahrpedals 11 stark schematisiert dargestellt ist, sind in den Figuren 2 und 3 zwei perspektivische Ansichten eines haptischen Fahrpedals 11 in einer konkretisierten Ausführungsform dargestellt. Der Aktuator 13 verfügt dabei über einen Gleichstrommotor 23 mit einem nachgeschalteten Getriebe 25, über das das von dem Motor 23 erzeugte Moment an eine Welle 41 übertragen wird. Um das Moment auf den Pedalhebel 5 des haptischen Fahrpedals 11 zu übertragen, ist diese Welle 41 jedoch nicht starr mit dem Pedalhebel 5 gekoppelt. Stattdessen ist an der Welle 41 ein elastisches Kopplungselement 9 in Form einer Drehfeder vorgesehen, so dass das an der Welle 41 angreifende Moment elastisch federnd auf ein mit diesem elastischen Kopplungselement 9 verbundenes Betätigungselement in Form eines Hebels 43 übertragen wird. Dieser Hebel 43 überträgt das Moment auf ein mechanisches Kopplungselement in Form eines Fortsatzes 45 des Pedalhebels 5. Wie nachfolgend detaillierter beschrieben, kann der Aktuator 13 dabei geeignet angesteuert werden, dass gewünschte Kräfte oder Kraftmuster, beispielsweise in Form von Vibrationen oder Pulsationen, auf den Pedalhebel 5 übertragen werden, unerwünschte hochfrequente Schwingungen jedoch durch das elastische Kopplungselement 9 dämpfend herausgefiltert werden. Eine zusätzliche Aktuator-Rückstellfeder 39 dient einer Getriebeverspannung und sorgt damit für Geräusch- und Verschleißminderung.

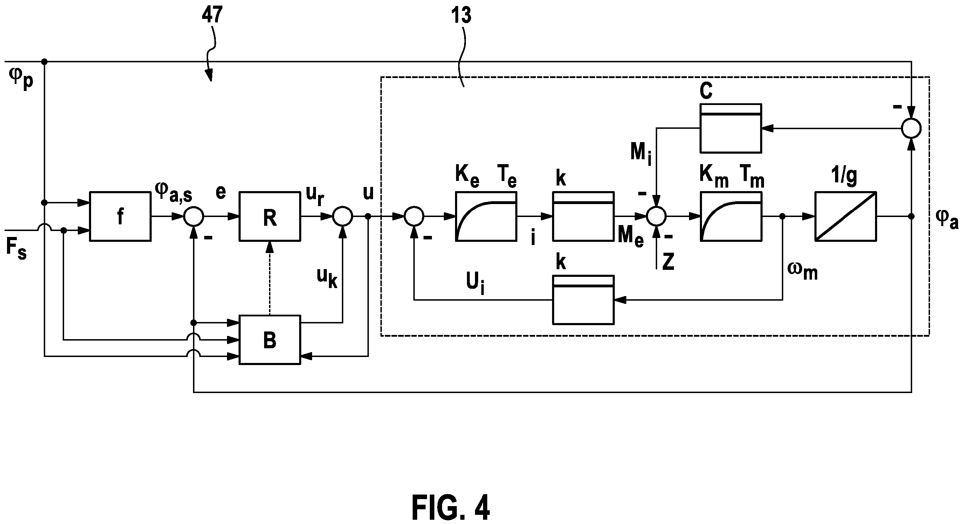

In Figur 4 ist ein Strukturbild des Aktuators 13 und einer zu dessen Steuerung in der Regelungseinheit 3 vorgesehenen Regelung 47 dargestellt. Der Aktuator 13 setzt sich aus einem Gleichstrommotor, einem Getriebe und einer Drehfeder als elastischem Kopplungselement zusammen.

Der Aktuator wird über eine Ankerspannung des Gleichstrommotors (u) gesteuert und die Position des Aktuators, das heißt ein Winkel am Ausgang des Aktuatorgetriebes ϕₐ, stellt eine Ausgangsgröße dar. Der Gleichstrommotor kann in ein elektrisches und ein mechanisches Teilsystem unterteilt angesehen werden. Beide Teilsysteme werden als Verzögerungsglieder erster Ordnung modelliert. Dabei hängen eine stationäre Verstärkung (Kₑ) und eine Zeitkonstante (Tₑ) des elektrischen Teilsystems von einem elektrischen Widerstand und einer Induktivität von Ankerwicklungen ab. Parameter des mechanischen Teilsystems (Kₘ, Tₘ) bestimmen sich aus einer Drehträgheit des Motorankers und einer geschwindigkeitsproportionalen Reibungskomponente. Der Motoranker wird durch ein elektromagnetisches Antriebsmoment (Mₑ), das über eine Motorkonstante (k) proportional zu dem Ankerstrom (i) ist, abzüglich eines Lastmoments (M₁) und eines Störmoments (z) beschleunigt. Eine Winkeldrehgeschwindigkeit des Motorankers (ωₘ) stellt einen Ausgang des mechanischen Teilsystems dar. Aufgrund einer Bewegung einer Ankerleiter im magnetischen Luftspaltfeld wird eine Spannung (Uᵢ) induziert, die eine Rückwirkung des mechanischen auf das elektrische Teilsystem darstellt. Das dem Motor nachgeschaltete Getriebe wird durch ein konstantes Übersetzungsverhältnis (g) modelliert.

Die vom Aktuator 13 auf den Pedalhebel 5 aufgebrachte Kraft hängt über das winkelabhängige Übersetzungsverhältnis zwischen Aktuator- und Pedalhebel von einem Motorlastmoment ab. Aus diesem Grund wird die Regelung der zusätzlichen Rückstellkraft durch eine Regelung des Motorlastmoments realisiert. Das Motorlastmoment ergibt sich aus dem Produkt aus Federsteifigkeit (C) des elastischen Kopplungselements und Differenz von Pedal- und Aktuatorwinkel (ϕₚ-ϕₐ). Da der Pedalwinkel ϕₚ vom Fahrer vorgegeben wird und eine Kennlinie der Federsteifigkeit als unveränderlich angenommen wird, lässt sich das Lastmoment nur über den Aktuatorwinkel ϕₐ einstellen. Damit wird die Regelung des Lastmomentes durch eine Positionsregelung für den Aktuatorwinkel realisiert. Dabei wird durch eine Messung von Pedal- und Aktuatorwinkel sowie einer Kenntnis der Federsteifigkeit ein Momentensensor nachgebildet.

Wird alternativ das Lastmoment direkt gemessen, so brauchen die Einflüsse, denen die Federsteifigkeit unterliegt, bei der Modellbildung und dem Reglerentwurf nicht berücksichtigt zu werden.

Im linearen Aktuatormodell ist der Einfluss von nicht-linearen Reibungskomponenten nicht enthalten und wird als unbekannte Störgröße (z) modelliert. Im Beobachter (B) wird diese Störgröße neben den Systemzuständen geschätzt und für eine Störgrößenkompensation (uₖ) verwendet.

Ein Regler (R), der zum Beispiel als PID-Algorithmus ausgebildet sein kann, erhält als Eingang eine Abweichung (e) zwischen Soll- und Ist-Aktuatorwinkel (ϕ_{a,s} - ϕₐ). Alternativ kann ein Zustandsregler, der die vom Beobachter geschätzten Systemzustände verwendet, eingesetzt werden. Liegt zusätzlich eine Strommessung vor, kann diese für den Einsatz eines reduzierten Beobachters oder einer Kaskadenregelung genützt werden.

Im Block (f) wird aus dem Pedalwinkel (ϕₚ) und der gewünschten zusätzlichen Rückstellkraft (Fₛ) der Sollaktuatorwinkel (ϕ_{a,s}) berechnet. Bei dieser Berechnung wird die vom Pedalwinkel (ϕₚ) abhängige Übersetzung zwischen Aktuator- und Pedalhebel berücksichtigt.

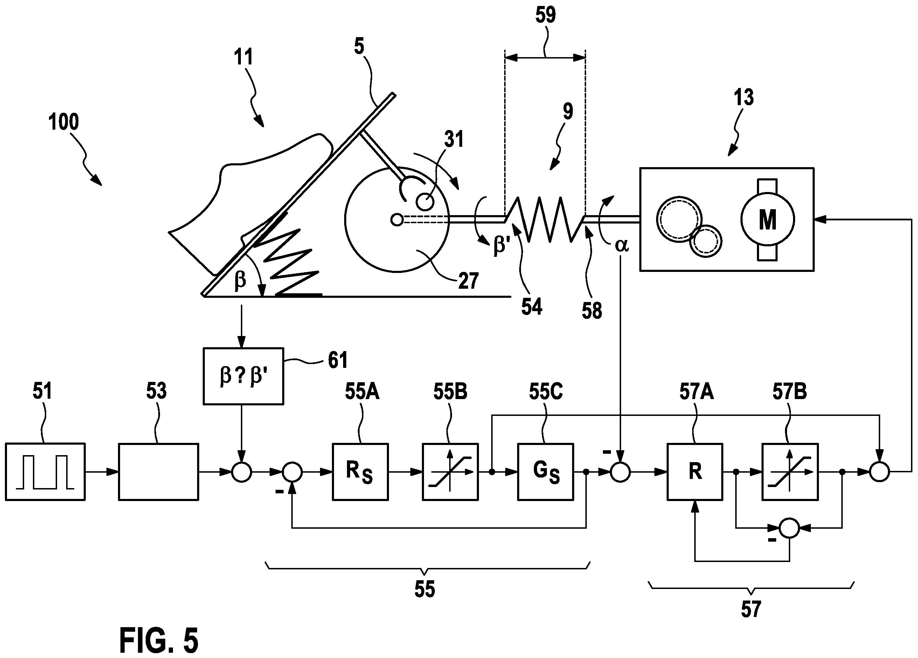

In Figur 5 ist eine Struktur eines Regelkreises, wie er in einer Regelungseinheit 3 zur Regelung eines Pedalsystems 100 gemäß einer Ausführungsform der vorliegenden Erfindung implementiert werden kann, in alternativer Weise dargestellt.

Als Eingangsgröße 51 wird ein Kraftprofil herangezogen, das entweder über der Zeit oder über dem Pedalwinkel aufgetragen sein kann, und das als zusätzliche Rückstellkraft, welche über die Koppelfeder 9 auf den Pedalhebel 5 wirken soll, dargestellt werden soll. Dieses Kraftprofil 51 wird anhand der bekannten elastischen Eigenschaften, insbesondere der Federsteifigkeit, des elastischen Kopplungselements 9 in einen Federweg / -winkel des elastischen Kopplungselements 9 umgerechnet, wobei der Federweg / -winkel auf Grund der Federsteifigkeit des elastischen Kopplungselement 9 die zusätzliche Rückstellkraft verursacht bzw. vorgibt.

Die bekannten elastischen Eigenschaften des elastischen Kopplungselementes 9 werden in dem Verrechnungsmodul 53 mit dem Kraftprofil verrechnet, so dass das Verrechnungsmodul 53 als Ausgangswert die Führungsgröße für den Federweg oder den Federwinkel liefert, wobei diese Führungsgröße den Sollwert für die Positionsveränderung des elastischen Kopplungselementes 9 vorgibt.

Das elastische Kopplungselement 9 weist einen getriebeseitigen Aufhängepunkt 58 und einen pedalseitigen Aufhängepunkt 54 auf. Die Stellung bzw. ein relativer Verdrehwinkel der Aufhängepunkte 54, 58 zueinander gibt den Federweg / -winkel des elastischen Kopplungselements 9 vor. Der pedalseitige Aufhängepunkt 54 kann auch als Fußpunkt β' bezeichnet werden. Die Winkellage des pedalseitigen Aufhängepunktes 54 der als elastisches Kopplungselement 9 dienenden Koppelfeder hängt allein von einem Pedalöffnungswinkel β ab. Zu der somit mit dem Pedalöffnungswinkel β korrelierenden Winkellage des pedalseitigen Aufhängepunktes 54 wird der berechnete Federweg / -winkel, der sich aus dem Kraftprofilwunsch ergibt, addiert. Ergebnis ist eine Sollstellung des Aktuators bzw. von dessen Getriebeabtrieb am getriebeseitigen Aufhängepunkt 58 des elastischen Kopplungselements 9.

Die Lagesensoreneinheit 61 ist ausgeführt, eine Position bzw. Winkellage des Pedalöffnungswinkels β sowie des Fußpunktes β' des pedalseitigen Aufhängepunktes 58 zu ermitteln und der Regelung zuzuführen.

Aufgabe einer Zwei-Freiheitsgrade-Regelung, welche zum Einen eine Feedforward-Control-Komponente 55 mit einem Zustandsregler 55A, einer Stellgrößenbegrenzung 55B und einem Reglermodell 55C und zum Anderen eine PID-Controller-Komponente 57 mit einem PID-Regler 57A und einer Stellgrößenbegrenzung 57B umfasst, ist, durch geeignete Stellsignale den Aktuator und damit den getriebeseitigen Aufhängepunkt 58 des elastischen Kopplungselementes so zu positionieren, dass eine aus dem Kraftprofil resultierende Federspannung erreicht wird. Die gewünschte Federspannung kann bei entsprechendem Stellvermögen des Aktuators innerhalb von beispielsweise 10 bis 40 ms aufgebaut werden. Die gewünschte Federspannung wird dadurch aufgebaut, dass ein Winkelabstand zwischen dem getriebeseitigen Aufhängepunkt 58 und dem pedalseitigen Aufhängepunkt 54 des elastischen Kopplungselementes 9 verändert wird.

Das Pedalsystem kann drei Lagesensoren aufweisen: einen Sensor zum Erfassen der Aktuatorwinkellage a, einen weiteren Sensor zum Erfassen der Winkellage β' des Betätigungselements 27 bzw. der Lage des Mitnahmeelements 31 auf dem Betätigungselement 27, und einen weiteren Sensor zum Erfassen der Winkellage β des Pedalhebels 5. In einem Ausführungsbeispiel sind mindestens zwei Lagesensoren erforderlich, ein erster Sensor zum Erfassen der Winkellage des Pedalhebels 5 und ein zweiter Sensor zum Erfassen der Winkellage des getriebeseitigen Aufhängepunktes 58. Diese Lagesensoren können beispielsweise Hallsensoren sein. Zwischen der Winkellage β des Pedalhebels und der Winkellage des Betätigungselements kann auch ein Proportionalitätsverhältnis gegeben sein, d.h. dass das Betätigungselement 27 über das Mitnahmeelement 31 so mit dem Pedalhebel 5 gekoppelt ist, dass das Betätigungselement bei einer Bewegung des Pedalhebels entsprechend mitgeführt wird. Alternativ kann das Pedalsystem auch so ausgeführt sein, dass das Betätigungselement bei einer Bewegung des Pedalhebels in Richtung des Fahrzeuglenkers nicht mitgeführt wird.

Durch Einsatz der beschriebenen Regelung kann eine Koppelfeder mit niedriger Steifigkeit hohe Kräfte in kurzer Zeit darstellen, da der Federweg des elastischen Kopplungselementes 9 als Regelgröße verwendet wird. Dies kann als eine der Hauptaufgaben der Regelung angesehen werden. Für ein erfindungsgemäßes Pedalsystem wird es dabei als vorteilhaft angesehen, eine niedrigsteife Koppelfeder, eine sehr schnelle Regelung und einen Aktuator mit einem schnellen Stellverhalten bereit zu stellen. Durch ein Zusammenspiel dieser drei Faktoren kann ein gewünschtes Kraftprofil in Höhe und Dynamik nahezu unverfälscht weiter gegeben werden. Die Koppelfeder gewinnt scheinbar an "Steifigkeit", d.h. dass dies durch eine schnelle Regelung und einen schnellen Aktuator erzielt wird. Gleichzeitig werden die signifikanten Dämpfungseigenschaften der niedrigsteifen Koppelfeder genutzt. Drehmomentschwankungen (ripple-torque) des Stellmotors können unterdrückt werden und das Pedal kann nahezu entkoppelt vom Aktuator betätigt werden. Störende Trägheitsmomente aus dem Aktuator sind somit an dem Pedalhebel kaum wahrnehmbar.

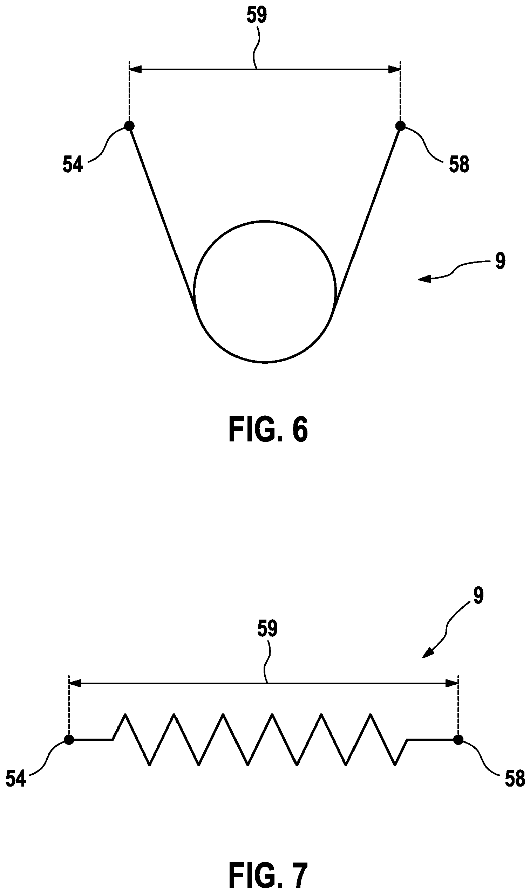

Fig. 6 zeigt ein elastisches Kopplungselement 9 in Form einer Drehfeder, deren beide Aufhängepunkte 54, 58 um den Federweg / -winkel 59 voneinander beabstandet sind. Die Federsteifigkeit der Drehfeder wirkt dabei so, dass die Aufhängepunkte 54, 58 nur unter Aufbringung einer externen Kraft aufeinander zu bewegt werden können. In dem Pedalsystem wie oben beschrieben stellt damit der Federweg / -winkel 59, der als relative Winkellage zwischen dem getriebeseitigen Aufhängungspunkt und dem pedalseitigen Aufhängungspunkt angesehen werden kann, zwischen den Aufhängepunkten 54, 58 die Regelungsgröße zum Regeln des Aktuators dar. Dieser Federweg kann beispielsweise über die Werte des Pedalhebellagesensors und des Aktuatorlagesensors ermittelt werden. Der erste Aufhängepunkt 54 stellt dabei den pedalseitigen Aufhängepunkt 54 und der zweite Aufhängepunkt 58 den getriebeseitigen Aufhängepunkt 58 dar. Die Aufhängepunkte 54, 58 werden von den beiden Federarmen der Drehfeder gebildet. Über eine Veränderung des Verdreh- bzw. Öffnungswinkels der Drehfeder wird die relative Position der Federarme zueinander verändert, womit sich auch der Federweg / -winkel 59 ändert, so dass damit eine Kraftausübung der Drehfeder eingestellt werden kann.

Fig. 7 zeigt alternativ zu Fig. 6 eine Druckfeder in Form einer Spiralfeder. Die Aufhängepunkte 54, 58, und damit der für die Regelung relevante Federweg / -winkel 59, sind in Längsrichtung der Feder um den Abstand 59 voneinander beabstandet. Sowohl in Fig. 6 als auch in Fig. 7 erstreckt sich der Federweg / -winkel 59, d.h. die Regelungsgröße des Aktuators des Pedalsystems, in derjenigen Richtung, in die die Aufhängepunkte 54, 58 durch die Federsteifigkeit voneinander weg gedrückt werden.

## Patentansprüche

1. Pedalsystem (100) für ein Kraftfahrzeug (1), aufweisend:
einen Pedalhebel (5), der von einem Fahrer durch Ausüben einer Kraft verlagert werden kann;
einen Aktuator (13) zum Erzeugen einer Rückstellkraft auf den Pedalhebel (5);
eine Regelungseinheit (3) zum Regeln des Aktuators (13); wobei ein elastisches Kopplungselement (9), welches wirkmäßig zwischen dem Pedalhebel (5) und dem Aktuator (13) derart angeordnet ist, dass die von dem Aktuator (13) erzeugte Gegenkraft über das elastische Kopplungselement (9) zumindest teilweise auf den Pedalhebel (5) übertragen wird;
**dadurch gekennzeichnet, dass**
ein Federweg (59) des elastischen Kopplungselementes (9) in Richtung der auf den Pedalhebel ausgeübten Kraft als Regelungsgröße zum Regeln des Aktuators verwendet wird,
wobei das Pedalsystem (100) ferner aufweist:
einen Pedalhebellagesensor (21) zum Erfassen einer aktuellen Position ϕₚ des Pedalhebels (5), und
einen Aktuatorlagesensor (37) zum Erfassen einer aktuellen Position ϕₐ des Aktuators (13);
wobei die aktuelle Position ϕₚ des Pedalhebels (5) und die aktuelle Position ϕₐ des Aktuators (13) den Federweg (59) des elastischen Kopplungselementes (9) definieren.

2. Pedalsystem (100) nach Anspruch 1, wobei das elastische Kopplungselement (9) dazu ausgelegt ist, von dem Aktuator (13) erzeugte Schwingungen mit Frequenzen von mehr als 8 Hz signifikant zu dämpfen.

3. Pedalsystem (100) nach Anspruch 1 oder 2, wobei das elastische Kopplungselement (9) eine Feder ist.

4. Pedalsystem (100) nach Anspruch 1 oder 2, wobei das elastische Kopplungselement (9) eine Drehfeder ist.

5. Verfahren zum Regeln eines Aktuators eines Pedalsystems (100) gemäß einem der Ansprüche 1 bis 4, wobei der Pedalhebel (5) des Fahrpedals (11) innerhalb eines Verlagerungsbereichs entlang einer Betätigungsrichtung (7) zwischen einer Ruheposition und einer maximal betätigten Position verlagerbar ist und mittels des Aktuators (13) durch Ausüben einer Gegenkraft entgegen der Betätigungsrichtung (7) zur Erzeugung eines haptisch wahrnehmbaren Signals angeregt werden kann;
**dadurch gekennzeichnet, dass** das Verfahren die folgenden Schritte aufweist:
Ermitteln einer aktuellen Position ϕₚ des Pedalhebels (5) sowie einer aktuellen Position ϕₐ des Aktuators (13);
Bestimmen eines aktuellen Federwegs (59) des elastischen Kopplungselementes aus der aktuellen Position ϕₚ des Pedalhebels (5) sowie der aktuellen Position ϕₐ des Aktuators (13); und
Regeln des Aktuators (13) derart, dass von dem Aktuator (13) das haptisch wahrnehmbare Signal mit einem vorgegebenen Kraftprofil über das Kopplungselement (9) auf das Fahrpedal (5) ausgeübt wird;
wobei zum Regeln des Aktuators der Federweg (59) des elastischen Kopplungselementes als Regelungsgröße dient,
wobei die aktuelle Position ϕₚ des Pedalhebels (5) und die aktuelle Position ϕₐ des Aktuators (13) den Federweg (59) des elastischen Kopplungselementes (9) definieren.

6. Verfahren nach Anspruch 5, wobei die Position ϕₐ des Aktuators (13) mittels einer 2-Freiheitsgrade-Regelung (55, 57) geregelt wird.

7. Regelungseinheit (3) zum Steuern eines Pedalsystems (100) in einem Kraftfahrzeug (1),
**dadurch gekennzeichnet, dass** die Regelungseinheit (3) dazu ausgelegt ist, ein Verfahren gemäß einem der Ansprüche 5 oder 6 durchzuführen.

8. Regelungseinheit (3) nach Anspruch 7, aufweisend:
einen Dateneingang zum Empfangen von Daten, welche eine aktuelle Position ϕₚ des Pedalhebels (5) angeben;
einen Dateneingang zum Empfangen von Daten, welche eine aktuelle Position ϕₐ des Aktuators (13) angeben;
eine Optimalwertsteuerung (55);
eine PID-Steuerung (57).

9. Computerprogrammprodukt, welches computerlesbare Anweisungen aufweist, die eine programmierbare Regelungseinheit (3) dazu anweisen, ein Verfahren gemäß einem der Ansprüche 5 oder 6 durchzuführen.

10. Computerlesbares Medium mit einem darauf gespeicherten Computerprogrammprodukt gemäß Anspruch 9.

## Claims

1. Pedal system (100) for a motor vehicle (1), comprising:
a pedal lever (5) that can be displaced by a driver by exerting a force;
an actuator (13) for producing a restoring force on the pedal lever (5);
a control unit (3) for controlling the actuator (13); wherein
an elastic coupling element (9) that is operatively disposed between the pedal lever (5) and the actuator (13) such that the counter force produced by the actuator (13) is at least partly transferred to the pedal lever (5) by means of the elastic coupling element (9);
**characterized in that**
a spring travel (59) of the elastic coupling element (9) in the direction of the force exerted on the pedal lever is used as a control variable for controlling the actuator,
wherein pedal system (100) further comprises:
a pedal lever position sensor (21) for detecting a current position ϕₚ of the pedal lever (5), and
an actuator position sensor (37) for detecting a current position ϕₐ of the actuator (13);
wherein the current position ϕₚ of the pedal lever (5) and the current position ϕₐ of the actuator (13) define the spring travel (59) of the elastic coupling element (9).

2. Pedal system (100) according to Claim 1, wherein the elastic coupling element (9) is designed to significantly damp oscillations produced by the actuator (13) with frequencies of more than 8 Hz.

3. Pedal system (100) according to Claim 1 or 2, wherein the elastic coupling element (9) is a spring.

4. Pedal system (100) according to Claim 1 or 2, wherein the elastic coupling element (9) is a torsion spring.

5. Method for controlling an actuator of a pedal system (100) according to any one of Claims 1 through 4, wherein the pedal lever (5) of the accelerator pedal (11) can be displaced within a displacement region along an actuation direction (7) between a rest position and a maximally activated position and can be stimulated by means of the actuator (13) by exerting a counter force opposite to the actuation direction (7) to produce a haptically perceptible signal;
**characterized in that** the method comprises the following steps:
determining a current position ϕₚ of the pedal lever (5) as well as a current position ϕₐ of the actuator (13) ;
determining a current spring travel (59) of the elastic coupling element from the current position ϕₚ of the pedal lever (5) as well as the current position ϕₐ of the actuator (13); and
controlling the actuator (13) such that the haptically perceptible signal is exerted on the accelerator pedal (5) by the actuator (13) with a predetermined force profile by means of the coupling element (9);
wherein the spring travel (59) of the elastic coupling element is used as a control variable for controlling the actuator,
wherein the current position ϕₚ of the pedal lever (5) and the current position ϕₐ of the actuator (13) define the spring travel (59) of the elastic coupling element (9).

6. Method according to Claim 5, wherein the position ϕₐ of the actuator (13) is controlled by means of a 2-degrees of freedom control function (55, 57).

7. Control unit (3) for controlling a pedal system (100) in a motor vehicle (1),
**characterized in that** the control unit (3) is designed to carry out a method according to any one of Claims 5 or 6.

8. Control unit (3) according to Claim 7, comprising:
a data input for the reception of data that define a current position ϕₚ of the pedal lever (5);
a data input for the reception of data that define a current position ϕₐ of the actuator (13); an optimal value controller (55);
a PID controller (57).

9. Computer program product comprising computer-readable instructions that instruct a programmable control unit (3) to carry out a method according to any one of Claims 5 or 6.

10. Computer-readable medium with a computer program product according to Claim 9 that is stored thereon.

## Revendications

1. Système de pédales (100) destiné à un véhicule automobile (1), comportant :
un levier de pédale (5) pouvant être déplacé par un conducteur en exerçant une force ;
un actionneur (13) destiné à produire une force de rappel sur le levier de pédale (5) ;
une unité de régulation (3) destinée à réguler l'actionneur (13) ;
dans lequel un élément de couplage élastique (9) est disposé de manière active entre le levier de pédale (5) et l'actionneur (13) afin que la force antagoniste produite par l'actionneur (13) soit transmise au moins partiellement au levier de pédale (5) par l'intermédiaire de l'élément de couplage élastique (9) ;
**caractérisé en ce qu'**une course de ressort (59) de l'élément de couplage élastique (9) dans la direction de la force exercée sur le levier de pédale est utilisée en tant que grandeur de régulation pour réguler l'actionneur, dans lequel le système de pédales (100) comporte en outre :
un capteur de position de levier de pédale (21) destiné à détecter une position actuelle ϕₚ du levier de pédale (5), et
un capteur de position d'actionneur (37) destiné à détecter une position actuelle ϕₐ de l'actionneur (13) ;
dans lequel la position actuelle ϕₚ du levier de pédale (5) et la position actuelle ϕₐ de l'actionneur (13) définissent la course de ressort (59) de l'élément de couplage élastique (9).

2. Système de pédales (100) selon la revendication 1, dans lequel l'élément de couplage élastique (9) est conçu pour amortir de manière significative les oscillations produites par l'actionneur (13) à des fréquences supérieures à 8 Hz.

3. Système de pédales (100) selon la revendication 1 ou 2, dans lequel l'élément de couplage élastique (9) est un ressort.

4. Système de pédales (100) selon la revendication 1 ou 2, dans lequel l'élément de couplage élastique (9) est un ressort de torsion.

5. Procédé de régulation d'un actionneur d'un système de pédales (100) selon l'une des revendications 1 à 4, dans lequel le levier de pédale (5) de la pédale d'accélérateur (11) peut être déplacé à l'intérieur d'une plage de déplacement dans une direction d'actionnement (7) entre une position de repos et une position actionnée maximale et peut être sollicité au moyen de l'actionneur (13) pour produire un signal perceptible haptiquement en exerçant une force antagoniste opposée à la direction d'actionnement (7) ; **caractérisé en ce que** le procédé comprend les étapes consistant à :
déterminer une position actuelle ϕₚ du levier de pédale (5) et une position actuelle ϕₐ de l'actionneur (13) ;
déterminer une course de ressort (59) actuelle de l'élément de couplage élastique à partir de la position actuelle ϕₚ du levier de pédale (5) et de la position actuelle ϕₐ de l'actionneur (13) ; et
réguler l'actionneur (13) de manière à ce que le signal perceptible haptiquement soit appliqué avec un profil de force prédéterminé par l'actionneur (13) sur la pédale d'accélérateur (5) par l'intermédiaire de l'élément de couplage (9) ;
dans lequel la course de ressort (59) de l'élément de couplage élastique sert de grandeur de régulation pour la régulation de l'actionneur,
dans lequel la position actuelle ϕₚ du levier de pédale (5) et la position actuelle ϕₐ de l'actionneur (13) définissent la course de ressort (59) de l'élément de couplage élastique (9).

6. Procédé selon la revendication 5, dans lequel la position ϕₐ de l'actionneur (13) est régulée au moyen d'une régulation à deux degrés de liberté (55, 57).

7. Unité de régulation (3) destinée à commander un système de pédales (100) dans un véhicule automobile (1),
**caractérisée en ce que** l'unité de régulation (3) est conçue pour la mise en oeuvre d'un procédé selon l'une des revendications 5 ou 6.

8. Unité de régulation (3) selon la revendication 7, comprenant :
une entrée de données destinée à recevoir des données indiquant une position actuelle ϕₚ du levier de pédale (5) ;
une entrée de données destinée à recevoir des données indiquant une position actuelle ϕₐ de l'actionneur (13) ;
une commande de valeur optimale (55) ;
une commande PID (57).

9. Produit de programme d'ordinateur comportant des instructions lisibles par ordinateur donnant instruction à une unité de régulation programmable (3) d'exécuter un procédé selon l'une des revendications 5 ou 6.

10. Support lisible par ordinateur sur lequel est stocké un programme d'ordinateur selon la revendication 9.
